# EUROPÄISCHE PATENTSCHRIFT

(11) **EP 0 575 653 B1**
(45) Veröffentlichungstag und Bekanntmachung des Hinweises auf die Patenterteilung: **13.03.1996**
(21) Anmeldenummer: 92110726.4
(22) Anmeldetag: 25.06.1992
(51) Int. Cl.: B01D 69/08, B01D 71/10

(54) **Verfahren zur Festigkeitserhöhung von hochpermeablen Kapillarhohlmembranen**
Process for the increase of strength of the highly permeable capillary hollow membranes
Procédé pour augmenter la résistance de membranes creuses capillaires très perméable

(43) Veröffentlichungstag der Anmeldung: 29.12.1993
(73) Patentinhaber: Sächsische Kunstseiden GmbH, D-01796 Pirna (DE)
(72) Erfinder: Gensrich, Heinz-Jürgen Dr. DC, D-14513 Teltow (DE); Hartwig, Stephan Dr. DC, D-39240 Calbe/Saale (DE); Müller, Klaus Dr. DC, D-01796 Pirna (DE); Philipp, Burkart Prof. Dr. DC, D-14513 Teltow (DE); Paul, Dieter Prof. Dr. DC, D-14532 Kleinmachnow (DE); Fink, Hans-Peter Dr. DP, D-14513 Teltow (DE); Weigel, Peter Dr. DP, D-14532 Kleinmachnow (DE); Kunze, Jürgen Dr. DC, D-14532 Kleinmachnow (DE); Holtz, Manfred Doz. Dr. DC, D-18059 Rostock (DE); Brechling, Christa DC, D-01796 Pirna (DE); Klünder, Lisa DC, D-01796 Pirna (DE); Nestler, Lothar DC, D-01723 Kesselsdorf (DE); Vogel, Dieter, D-01796 Pirna (DE)
(74) Vertreter: Rauschenbach, Marion, Dipl.-Ing.

(56) Entgegenhaltungen:
- EP-A- 0 131 143
- PATENT ABSTRACTS OF JAPAN vol. 7, no. 225 (C-189)6. Oktober 1983

## Beschreibung

Die Erfindung betrifft die Herstellung festigkeitserhöhter Kapillarhohlmembranen, die vorwiegend in der Medizin zur Blutdetoxikation eingesetzt werden.
Es ist bekannt, Kapillarhohlmembranen nach ihrer Herstellung und Formgebung durch eine nachträgliche Behandlung zu modifizieren.
Es ist üblich und notwendig, zur Weichmachung und zur Reaktivierung des für Transportprozesse notwendigen Porenanteils von Kapillarhohlmembranen, die als Membranen für die Blutdetoxikation durch Dialyse und Ultrafiltration nach ihrer Wiederaufquellung in wäßrigen Lösungen eingesetzt werden, Präparationsmittel anzuwenden. Sie werden üblicherweise vor der herstellungsbedingten Trocknung als Inhaltsstoffe der Avivage aufgebracht und durchdringen während der Trocknung die mikroporöse Kapillarhohlmembranwand. Ohne Präparationsmittel können dagegen die beim Hohlmembranbildungsprozeß entstandenen Poren irreversibel kollabieren und nicht mehr für Transportprozesse genutzt werden.
Es ist bekannt, Kapillarhohlmembranen für Dialyse und Ultrafiltration aus Regeneratcellulose mit Glycerin als Weichmacher zu behandeln (Firmenschriften der Enka-Glanzstoff AG, BRD, für Celluloseregenerathohlfäden nach dem Cuoxamverfahren; Firmenschrift der Cordis-Dow Corporation, USA für Celluloseregenerathohlfäden aus verseiftem Celluloseacetat). Diese Glycerinpräparation wird auch auf Celluloseregenerathohlmembranen aufgebracht, die nach dem Viskoseverfahren (DD-PS 131 941; DD-PS 132 798; DD-PS 137 366; DD-PS 143 037) hergestellt werden. Solche Kapillarhohlmembranen mit Glycerinauflage bis zu 90 %, bezogen auf Cellulose, besitzen aber einen entscheidenden Mangel, ihre Permeabilität, insbesondere ihre Ultrafiltrationsleistung (UFR) nimmt mit der Zeit der Lagerung auf ca. 50 % der Ursprungsleistung ab. Das bedeutet, daß den Anwendern ein instabiles Produkt geliefert wird oder aber die Hohlmembranen und/oder die daraus gefertigten Dialysatoren so lange gelagert werden müssen, bis sie konstante Eigenschaften besitzen. Beide Wege sind unbefriedigend und mit erhöhtem Aufwand verbunden.
Darüber hinaus werden die Leistungsparameter der Viskosekapillarmembranen mit Glycerinauflage bei einer Temperaturbelastung, z.B. beim Verguß mit sogenannten Einbettungsmitteln zum Herstellen der rohrbündelartigen Dialysatoren, in gleicher Weise beeinflußt, d.h. die Permeabilität und insbesondere die Ultrafiltrationsleistung nehmen ab.

Nun kann man diese Abnahme, und zwar sowohl die **alterungs- als auch** die temperaturbedingte Abnahme der UFR mit einer Erhöhung der Glycerinauflage auf die Hohlmembran vor deren Trocknung, wodurch eine weitere Reaktivierung latent vorhandener Hohlräume auftritt, kompensieren, so daß z.B. eine Verdoppelung des auf die Cellulose bezogenen Glyceringehaltes resultiert, jedoch stößt man damit bald auf eine Grenze für den Fall, daß Polyurethanvergußmassen (PUR), d.h. die gegenwärtig gebräuchlichsten Einbettungsmittel, zum Einsatz kommen. Es entstehen ungeeignete Einbettungen bzw. Kapillarmembranen lassen sich nicht dicht einbetten. Die Grenze liegt, abhängig von der spezifischen Beschaffenheit der Polyurethan-Einbettungsmischung, bei einer Glycerinkonzentration von ca. 70 %, bezogen auf Cellulose.

Es ist außerdem bekannt, daß mit der weiteren Reaktivierung latent vorhandener Poren über die Anhebung der Glycerinauflage und/oder mit steigender Porosität durch die Kapillarhohlmembranherstellung z.B. nach DD-PS 143 037, die wiederum zu ihrer Bewahrung hohe Glycerinauflagen erfordert, die Festigkeit von Hohlmembranen abnimmt.

Solche Kapillarhohlmembranen sind demzufolge aus Festigkeitsgründen für die Erzeugung von Dialysatoren schwer handhabbar und verursachen einen hohen Ausschuß.

Es ist darüber hinaus bekannt, daß einbettfähige und permeationsstabile Hohlfäden erhalten werden können, wenn die glycerinhaltige Auflage niedermolekulare Zusätze wie z.B. Sorbit, Mannit oder Glucose enthält. Damit ist es aber nicht möglich, die Festigkeit hochpermeabler Kapillarhohlmembranen zu erhöhen.

Die Aufgabe der Erfindung besteht darin, hochpermeable festigkeitserhöhte Kapillarmembranen, die nach dem Viskoseverfahren erzeugt wurden, durch eine Behandlung mach ihrer Formgebung herzustellen.

Es wurde gefunden, daß die Festigkeit von hochpermeablen Kapillarhohlmembranen aus Regeneratcellulose nach dem Viskoseverfahren bei Wahrung ihrer Permeabilität und Einbettbarkeit in Polyurethanen dann erhöht wird, wenn bei der der Trocknung vorangehenden Präparierung die Kapillarhohlmembranen mit Avivagen behandelt werden, die Zusätze aus O- und/oder OH-gruppenhaltigen neutralen im wesentlichen nicht flüchtigen wasserlöslichen organischen Substanzen, vorzugsweise Polyethylen- und/oder Polypropylenglykolen und/oder Polyolen allein oder im Gemisch mit Zuckeralkoholen und/oder Glycerol, enthalten.

Hierbei hat es sich als vorteilhaft erwiesen, wenn die Zusätze in einer Menge von 7 bis 45 g/100 g, vorzugsweise 8 bis 30 g/100 g, in der Avivage enthalten sind, so daß abhängig von der Einsatzmenge der Zusätze und der Aufnahmefähigkeit der Kapillarhohlmembranporen eine Gesamtmenge an Präparationsmitteln von 30 bis 200 g/100 g, bezogen auf Cellulose, vorzugsweise 40 bis 135 g/100 g, bezogen auf Cellulose, auf die Hohlmembranen aufgebracht werden.
Ein wesentlicher und unverzichtbarer Bestandteil der Zusätze zum Erreichen des erfindungsgemäßen Effektes ist der Einsatz von O- und/oder OH-gruppenhaltigen neutralen im wesentlichen nicht flüchtigen wasserlöslichen organischen Substanzen oder deren Gemischen mit Molmassen von ca. 150 **bis** 30 000 g/Mol, wobei bevorzugt Polyethylenglykole bzw. Polypropylenglykole oder aber Polyole vom Typ Polypropylenglycerolether im Molmassenbereich von 182 bis ca. 15 000 verwendet werden können.

Zur Wahrung der gesamten Eigenschaftsbreite der Kapillarhohlmembranen ist es darüberhinaus vorteilhaft, daß niedermolekulare wasserlösliche Stoffe, wie Zuckeralkohole, z.B. Sorbitol und/oder Mannit und/oder Glycerol mit Molmassen von 92 bis 182 g/Mol in der Avivage enthalten sind, wobei zur Erhaltung des erfindungsgemäßen Effektes das Masseverhältnis dieser Substanzen mit einer Molmasse unter 182 g/Mol zu solchen unverzichtbaren Substanzen mit einer Molmasse von größer/gleich 182 G/Mol einen Wert von 5 nicht überschreiten darf. Gemische aus den unverzichtbaren organischen Substanzen dagegen können auch allein eingesetzt werden.
Es ist **von** Vorteil, Zusätze höherer Molmasse immer dann einzusetzen, wenn das Herstellungsverfahren der Kapillarhohlmembranen auch eine höhere Ausgangsporosität herzustellen erlaubt, so wie es z.B. **unter Verwendung flüssiger Lumenfüller** nach DD-PS 143 037 in weiten Grenzen möglich ist. Hierbei bleibt der festigkeitserhöhende Effekt im Vergleich zum Stand der Technik erhalten und wird sogar auf einen Konzentrationsbereich oberhalb 70 g/100 g Präparationsauflage, bezogen auf Cellulose ausgedehnt, so daß hochpermeable, einstellungsfähige, leistungsstabile und handhabungsfähige Hohlmembranen entstehen.

Nach der Einbettung bleiben die Kapillarhohlmembranen ebenfalls weitgehend permeationsstabil. Einbettungen von festigkeitserhöhten Kapillarhohlmembranen mit Präparationsauflagen von größer 70 g/100 g, bezogen auf Cellulose, werden erst durch das erfindungsgemäße Vorgehen möglich.

Selbst höhere Glycerolauflagen als 70 %, bezogen auf Cellulose, die sonst zu ungeeigneten Einbettungen führen, wirken sich in Gegenwart von Zusatzstoffen nicht nachteilig auf die Einbettbarkeit der Kapillarhohlmembranen aus. Durch das erfindungsgemäße Vorgehen können neben der Festigkeitserhöhung somit sogar Permeationseigenschaften ohne Benachteiligung der Einbettbarkeit variiert werden wodurch eine bedeutende Leistungsreserve für die Anwendung der Kapillarhohlmembranen zur Blutdetoxikation erschlossen wird. Damit besteht neben der Variation der Hohlmembraneigenschaften durch den Spinnprozeß die Möglichkeit der nachträglichen Beeinflussung durch die Präparation.

### Beispiel 1:

Es wurde eine Reihe von Kapillarhohlmembranen aus Viskosen mit einem Cellulosegehalt von 8,3 g pro 100 g Spinnviskose und einem Düsenverzug von 1,4 nach Beispiel 1 der DD-PS 137 366, **d.h. mit gasförmigen Lumenfüllern**, hergestellt und vor der üblichen Trocknung mit Avivagen präpariert, die die in der nachfolgenden Tabelle **1** aufgeführten Zusätze als Präparationsmittel in unterschiedlichen Gehalten und Zusammensetzungen enthielten, und ihr Präparationsmittelgehalt wie üblich als Summe gravimetrisch, bezogen auf Cellulose, bestimmt. Die Ultrafiltrationsleistung dieser Kapillarhohlmembranen, als Wasserdurchlässigkeit WD sofort, nach einer zusätzlichen Trockenschrankbehandlung bei 65 °C über 6 Stunden sowie nach 135 bis 175 Tagen Lagerung (Zimmertemperatur) im Testpermeatoren wie in Medizintechnik 21 (1981) 1, S. 2 bis 6 beschrieben, ermittelt, ist ebenfalls in der Tabelle **1** aufgeführt. Die Reißkraft dieser Kapillarhohlmembranen wurde bei Normklima und mit einer Einspannlänge von 50 mm an einem Zwick-Prüfgerät gemessen. **Die Versuche nach Nr. 1,2 und 3 in Tabelle 1 stellen den Stand der Technik dar.**

Die Versuche Nr. 7 und 9 sind nicht erfindungsgemäß, sondern als Vergleichsversuche zu werten.

**Tabelle 1**

| Meß- und Prüfwerte einheitlich nach Beispiel 1 hergestellter, aber unterschiedlich präparierter Kapillarhohlmembranen (KHM) | | | | | | | |
|---|---|---|---|---|---|---|---|
| Nr. | Präp.mittelgehalt in g/100 g | | Reißkraft in N | WD in cm³/hxm²xkPa | | | Einbettbarkeit in PUR |
| | Avivagebad | Cellulose der KHM | | sofort | gelag. | sofort nach 6h/6**5** °C | |
| 1 | ohne | 0 | 1,95 | 7,9 | 4,2 | 4,0 | ja |
| 2 | 10 Glycerol | 63 | 1,02 | 34,7 | 19,3 | 15,9 | ja |
| 3 | 18 Glycerol | 99 | 0,71 | 56,3 | 32,3 | 29,1 | nein |
| 4 | 16 TEG ¹⁾ | 88 | 0,97 | 87,6 | 63,9 | 61,0 | ja |
| 5 | 13 PPGGE ²⁾ | 77 | 1,10 | 73,8 | 78,1 | 67,2 | ja |
| 6 | 11 PEG³⁾ | 66 | 1,09 | 61,4 | 52,2 | 49,7 | ja |
| 7 | 6 Glycerol + 6 Sorbitol | 78 | 0,80 | 41,6 | 37,1 | 33,3 | ja |
| 8 | 4 Glycerol + 6 PEG | 57 | 0,97 | 53,9 | 45,0 | 43,8 | ja |
| 9 | 6 Sorbitol **+** | 82 | 1,10 | 82,3 | 83,5 | 72,9 | ja ⁴⁾ |
| 10 | 6 Glycerol + 6 PPGGE ²⁾+ 6 Sorbitol | 103 | 0,92 | 85,1 | 74,7 | 75,1 | ja |

| | | | | | | | |
|---|---|---|---|---|---|---|---|
| ¹⁾ Triethylenglykol | | | | | | | |
| ²⁾ Polypropylenglycerinether der Molmasse 400 | | | | | | | |
| ³⁾ Polyethylenglykol der Molmasse 600 | | | | | | | |
| ⁴⁾ einzelne Kristalle an der Faser | | | | | | | |

### Beispiel 2

Es wurden **höchstpermeable** Kapillarhohlmembranen **mit flüssigem Lumenfüller** nach Beispiel 7 der DD-PS 143 037 aus Viskosen mit einem Cellulosegehalt von 8,2 g pro 100 g Viskose bei Viskosereifen nach Hottenroth von 14 Grad und einem Verzug von 1,4 hergestellt, wobei das Fällbad einen Schwefelsäuregehalt von 199 g/100 g und Temperaturen von 20 bis 35 °C besaß. Sie wurden im feuchten Zustand mit unterschiedlichen Präparationsmitteln, wie in der folgenden Tabelle **2** aufgeführt, entsprechend dem vorstehenden Beispiel 1 präpariert, behandelt und geprüft. Zur Entfernung des verwendeten flüssigen Fettsäureesters als Lumenfüller wurden die Testpermeatoren vor ihrer Prüfung auf Ultrafiltrationsleistung mit Ethanol gespült und dieser gegen destilliertes Wasser ausgetauscht. Die Ergebnisse wird in der folgenden Tabelle **2** aufgeführt. **Die Versuche Nr. 1 und 6 in Tabelle 2 stellen den Stand der Technik dar.**

**Tabelle 2**

| Meß- und Prüfwerte einheitlich nach Beispiel **2** hergestellter, aber unterschiedlich präparierter Kapillarhohlmembranen (KHM) | | | | | | | |
|---|---|---|---|---|---|---|---|
| Nr. | Präp.mittelgehalt in g/100 g | | Reißkraft in N | WD in cm³/hxm²xkPa | | | Einbettbarkeit in PUR |
| | Avivagebad | Cellulose der KHM | | sofort | gelag. | sofort nach 6h/ 6**5** °C | |
| 1 | 12 Glycerol | 71 | 0,39 | 540 | 264 | 238 | (ja) |
| 2 | 6 Glycerol + 6 Sorbitol + 6 PEG ¹⁾4400 | 99 | 0,43 | 831 | 598 | 590 | ja |
| 3 | 7 Glycerol + 7 PEG ¹⁾10000 | 83 | 0,45 | 670 | 509 | 498 | ja |
| 4 | 6 Glycerol + 6 PEG ¹⁾20000 | 73 | 0,45 | 585 | 447 | 444 | ja |
| 5 | 5 TEG + 5 PPGGE ²⁾400+ 5 PEG ¹⁾4400 | 95 | 0,60 | 700 | 536 | 506 | ja |
| 6 | 25 Glycerol | 123 | 0,33 | 883 | 526 | 516 | nein |
| 7 | 6 Glycerol + 6 Sorbitol + 6 PEG ¹⁾600 | 108 | 0,42 | 789 | 542 | 542 | ja |

| | | | | | | | |
|---|---|---|---|---|---|---|---|
| ¹⁾ Polyethylenglykol der Molmasse | | | | | | | |
| ²⁾ Polypropylenglycerolether der Molmasse | | | | | | | |

## Patentansprüche

1. Verfahren zur Festigkeitserhöhung von hochpermeablen Kapillarhohlmembranen aus Regeneratcellulose nach dem Viskoseverfahren zur Herstellung von permeationsstabilen in Polyurethan einbettungsfähigen Kapillarhohlmembranen, gekennzeichnet durch eine Behandlung nach der Formgebung der Kapillarhohlmembranen vor deren Trocknung mit Avivagen, die Zusätze aus O- und/oder OH-gruppenhaltigen neutralen im wesentlichen nicht flüchtigen wasserlöslichen organischen Subtanzen mit Molmassen von 150 bis 30 000 g/Mol, vorzugsweise 182 bis 15 000 g/Mol oder deren Gemische allein oder im Gemisch mit organischen OH-gruppenhaltigen wasserlöslichen im wesentlichen nicht flüchtigen Stoffen mit einer Molmasse von 92 bis 182 g/Mol in Mengen von 7 bis 45 g pro 100 g Avivage enthalten, so daß die Kapillarhohlmembranen nach ihrer Trocknung Avivageinhaltsstoffe von O- und/oder OH-gruppenhaltigen wasserlöslichen neutralen im wesentlichen nicht flüchtigen organischen Substanzen mit einem Molekulargewicht von 150 bis 30 000 g/Mol in Mengen von 30 bis 200 g/100 g Cellulose, vorzugsweise 40 bis 135 g/100 g Cellulose aufweisen, wobei das Verhältnis von Substanzen mit einem Molekulargewicht von kleiner als 182 g/Mol zu solchen mit einem Molekulargewicht von größer als 182 g/Mol einen Wert von 5 nicht überschreiten darf.

2. Verfahren nach Anspruch 1, gekennzeichnet dadurch, daß die O- und/oder OH-gruppenhaltigen wasserlöslichen neutralen im wesentlichen nicht flüchtigen organischen Substanzen mit einer Molmasse größer 150 g/Mol bis 30 000 g/Mol Polyalkylenglykole, insbesondere Polyethylenglykole und/oder Polypropylenglykole und speziell Polyole, sind.

3. Verfahren nach Anspruch 1 und 2, gekennzeichnet dadurch, daß die Molmassen der O- und/oder OH-gruppenhaltigen wasserlöslichen neutralen im wesentlichen nicht flüchtigen organischen Substanzen 182 bis 15 000 g/Mol betragen.

4. Verfahren nach Anspruch 1 bis 3, gekennzeichnet dadurch, daß Polyalkylenglykole der Molmasse 182 bis 15 000 Polyethylenglykole und/oder Polypropylenglykolglycerolether der Molmassen 300 bis 1 000 sind.

5. Verfahren nach Anspruch 1, gekennzeichnet dadurch, daß die OH-gruppenhaltigen wasserlöslichen neutralen im wesentlichen nicht flüchtigen organischen Stoffe mit einer Molmasse von 92 bis 182 g/Mol Zuckeralkohol, speziell Sorbitol, Glukose und Glycerol, sind.

6. Verfahren nach Anspruch 1, gekennzeichnet dadurch, daß die Kapillarhohlmembranen nach ihrer Trocknung Avivageinhaltsstoffe in Mengen von 40 bis 135 g/100 g Cellulose enthalten.

## Claims

1. Method for increasing the strength of highly permeable capillary hollow membranes of cellulose regenerated by the viscose method for manufacturing diffusion-stable capillary hollow membranes embeddable in polyurethane characterised by a treatment after the shaping of the capillary hollow membranes and prior to their drying with reviving agents which contain additives consisting of O- and/or OH-group-containing neutral essentially non-volatile water-soluble organic substances with molecular weigths of 150 to 30 000 g/mol, preferably 182 to 15 000 g/mol or their mixtures alone or mixed with organic OH-group-containing water-soluble essentially non-volatile substances with a molecular weight of 92 to 182 g/mol in amounts of 7 to 45 g per 100 g of reviving agent, so that the capillary hollow membranes possess after their drying reviving agent components from O- and/or OH-group-containing water-soluble neutral essentially non-volatile organic substances with a molecular weight of 150 to 30 000 g/mol in amounts of 30 to 200 g/100 g of cellulose, preferably 40 to 135 g/ 100 g of cellulose, wherein the ration of substances with a molecular weight of less than 182 g/mol to those with a molecular weight of more than 182 g/mol must not exceed a value of 5.

2. Method according to claim 1, characterised in that the O- and/or OH-group-containing water-soluble neutral essentially non-volatile organic substances with a molecular weight of more than 150 g/mol to 30 000 g/mol are polyalkylene glycols, in particular polyethylene glycols and/or polypropylene glycols and specifically polyols.

3. Method according to claims 1 and 2, characterised in that the molecular weights of the O- and/or OH-group-containing water-soluble neutral essentially non-volatile organic substances come to 182 to 15 000 g/mol.

4. Method according to claims 1 to 3, characterised in that the polyalkylene glycols of molecular weight 182 to 15 000 are polyethylene glycols and/or polypropylene glycol glycerol ethers of molecular weights 300 to 1 000.

5. Method according to claim 1, characterised in that the OH-group-containing water-soluble neutral essentially non-volatile organic substances with a molecular weight of 92 to 182 g/mol are sugar alcohol, specifically sorbitol, glucose and glycerol.

6. Method according to claim 1, characterised in that the capillary hollow membranes contain after their drying reviving agent components in amounts of 40 to 135 g/100 g of cellulose.

## Revendications

1. Procédé pour augmenter la résistance de membranes creuses capillaires très perméables en cellulose régénérée selon le procédé de viscose pour fabriquer des membranes creuses capillaires stables à la perméation, susceptibles d'être intégrées dans du polyuréthane, caractérisé par un traitement après mise en forme des membranes creuses capillaires et avant leur séchage, avec des agents d'avivage renfermant des additifs de substances organiques solubles dans l'eau, essentiellement non volatiles, neutres, contenant des groupes O- et/ou OH-, avec des masses molaires de 150 à 30 000 g/Mol et de préférence 182 à 15 000 g/Mol ou leurs mélanges seuls ou en mélange avec des matières organiques, essentiellement non volatiles, solubles dans l'eau, contenant des groupes OH-, et de masses molaires comprises entre 92 et 182 g/Mol, suivant des quantités de 7 à 45 g pour 100 g d'agent d'avivage, de facon que les membranes creuses capillaires renferment, après leur séchage, des agents d'avivage présentant des substances organiques essentiellement non volatiles, neutres, solubles dans l'eau, contenant des groupes O- et/ou OH-, ayant un poids moléculaire compris entre 150 et 30 000 g/Mol, suivant des quantités comprises entre 30 et 200 g/100 g de cellulose et de préférence entre 40 et 135 g/100 g de cellulose, le rapport entre les substances d'un poids moléculaire inférieur à 182 g/Mol et celles ayant un poids moléculaire supérieur à 182 g/Mol ne devant pas dépasser une valeur égale à 5.

2. Procédé selon la revendication 1, caracterisé en ce que les substances organiques essentiellement non volatiles, neutres, solubles dans l'eau, contenant des groupes O- et/ou OH-, ayant une masse molaire supérieure à 150 g/Mol à 30 000 g/Mol sont des polyalkylèneglycols, notament des polyéthylèneglycols et/ou des polypropylèneglycols et en particulier des polyols.

3. Procédé selon les revendications 1 et 2, caractérisé en ce que les masses molaires des substances organiques essentiellement non volatiles, neutres, solubles dans l'eau, contenant des groupes O- et/ou OH-, sont comprises entre 182 et 15 000 g/Mol.

4. Procédé selon les revendications 1 à 3, caractérisé en ce que les polyalkylènesglycols dont la masse molaire est comprise entre 182 et 15 000 sont des polyéthylèneglycols et/ou des polypropylèneglycolglycérolèthers de masse molaire comprise entre 300 et 1000.

5. Procédé selon la revendication 1, caractérisé en ce que les matières organiques essentiellement non volatiles, neutres, solubles dans l'eau, contenant des groupes OH- d'une masse molaire comprise entre 92 et 182 g/Mol sont des alcools de sucre en particulier du sorbitol, du glucose et du glycérol.

6. Procédé selon la revendication 1, caractérisé en ce que les membranes creuses capillaires contiennent, après leur séchage des agents d'avivage en quantité comprise entre 40 et 135 g pour 100 g de cellulose.
